# EUROPEAN PATENT SPECIFICATION

(11) **EP 3 741 030 B1**
(45) Date of publication and mention of the grant of the patent: **17.04.2024**
(21) Application number: 19704055.3
(22) Date of filing: 17.01.2019
(51) Int. Cl.: H02K 7/116, H02K 16/00

(54) **ELECTRIC MACHINE**
ELEKTRISCHE MASCHINE
MACHINE ÉLECTRIQUE

(30) Priority: 17.01.2018 IT 201800001187
(43) Date of publication of application: 25.11.2020
(73) Proprietor: Enecolab S.r.l., 34147 Trieste (IT)
(72) Inventor: BONACCI, Walter, 38057 PERGINE VALSUGANA (IT); MARQUARDT, Lucio, 34141 TRIESTE (IT)
(74) Representative: Petraz, Gilberto Luigi
(86) International application number: PCT/IT2019/050007
(87) International publication number: WO 2019/142221

(56) References cited:
- EP-A1- 1 250 748
- EP-A2- 0 587 120
- WO-A1-2013/176407
- WO-A2-2013/182964
- US-B1- 7 466 053
- US-B1- 8 253 294

## Description

### FIELD OF THE INVENTION

The present invention concerns an electric machine, in particular an electric machine for converting mechanical energy into electric energy.

### BACKGROUND OF THE INVENTION

It is known that electric machines, also called current generators, consist of a stator and a rotor, configured to cooperate with one another to generate an electromagnetic field.

The stator is fixed with respect to the electric machine, while the rotor is configured to rotate inside the stator by means of a drive shaft.

Generally, the stator comprises electric coils while the rotor comprises electromagnets or permanent magnets. However, opposite solutions are also known, in which the stator comprises electromagnets or permanent magnets and the rotor comprises electric coils.

During rotation, the electric machine generates a rotating magnetic field, which induces an electromotive force (emf) on the electric coils. The electromotive force induced generates an electric current, which can be direct or alternate.

As an example, WO 2013/182964 discloses a driven mechanical transmission system that includes an output shaft and an electrical motor, with a first rotor and a second rotor counter rotatable relatively to the first rotor. The system further includes a transmission having a first portion adapted to convey a rotational torque from the first rotor to the output shaft and a second portion adapted to convey a rotational torque from said second rotor to said output shaft in a reversed direction, relatively to the first portion. The system further includes a brake unit for blocking selectively one of the rotors so that the machine on which the transmission system is mounted can work with a high or a low reduction ratio, at will.

US 7466053 describes a dual rotor electric traction motor wherein an inner rotor is arranged as a motor field, including permanent magnets embedded in an inner rotor core and an inner rotor shaft coupled with the inner rotor core. An outer rotor is arranged as a motor armature, including a hollow armature core, plurality of windings, two side flanges, and an outer rotor shaft coupled with one of the side flanges. The inner rotor is rotatably supported inside the outer rotor, and both rotors are rotatably supported inside a stationary motor enclosure. Electric current is conducted to the windings of the armature via brushes and sliprings. The interaction between a revolving electromagnetic field of the outer rotor and the permanent magnetic field of the inner rotor propels both rotors to rotate in opposite directions. Two axial fans integrated with the outer rotor side flanges and two axial fans coupled with the inner rotor shaft work in series and produce continuous internal close-loop air circulation between both rotors and between the outer rotor and the motor enclosure, for improving the rate of heat transmission from the rotors to the motor enclosure. If the outer rotor is selectively immobilized, the two inner rotor axial fans produce the internal close-loop air circulation.

EP 1250748 shows an electric drive for a vehicle comprising a motor housing having a stator and a rotor, wherein the motor housing and the rotor perform opposite rotational movements. A drive train is connected to the motor housing and the rotational movement of the motor housing is carried out by means of a transmission device with the same drive and output direction of rotation. The remaining drive train is connected to the rotor and the rotational movement of the rotor is carried out by means of a transmission device with opposite drive and output direction of rotation. The transmission devices are planetary gears. The rotor engages with the planet wheels of the allocated planetary gear by means of a spur pinion that is arranged on the shaft or the motor housing engages with the planet wheels of the allocated planetary gear by means of a spur pinion that is connected to the motor housing and is arranged on the axis of the motor housing. A web is provided connected to the axles of the planet wheels of each planetary gear and drives the wheel shaft assigned thereto.

US 8253294 discloses an enhanced dual rotational electric motor/generator including an armature that rotates about a central axis in one direction, a stator that rotates about the central axis in an opposite direction, an axle that extends along the central axis and is secured to the armature, an axle support, a rotational output alignment mechanism for converting the opposite rotations of the armature and stator into a common rotational output direction, and an electrical connection mechanism that supplies functioning electrical communication between the motor/generator and external electrical circuitry while operating the motor/generator.

WO 2013/176407 discloses a power generation apparatus that includes a central shaft rotating in the forward or reverse direction; a first rotor coupled to the central shaft via a first unidirectional bearing so as to rotate with the central shaft in the forward direction when the central shaft rotates in the forward direction; and a second rotor coupled to the central shaft via a second unidirectional bearing so as to rotate with the central shaft in the reverse direction when the central shaft rotates in the reverse direction. The power generation apparatus can be efficiently operated by an external power source which moves in two directions, and can have improved durability.

EP 0587120 shows a driving system for an electric vehicle which drives wheels thereof with the aid of an AC motor via an inverter while a battery is used as a power source. One of the primary and the secondary sides of the AC motor is operatively connected to a power transmission shaft for one of a left-hand wheel and a right-hand wheel via a reversible type speed reducing mechanism while the direction of rotation of the power transmission shaft is reversed relative to that of the one of the primary and secondary sides. The other one of the primary and the secondary sides of the AC motor is operatively connected to a power transmission shaft for the other one of the wheels via a non-reversible type speed reducing mechanism while the direction of rotation of the power transmission shaft is kept unchanged relative to that of the other one of the primary and secondary sides.

One disadvantage of such known electric machines is that the electric energy produced, or electric power, is directly correlated to the rotational speed of the rotor, so it is known to make electric machines able to reach a very high angular speed (ω), so as to increase the electric power output.

To reach this angular speed it is necessary to increase the mechanical energy that has to be supplied at input to the electric machine, with a consequent high expenditure of resources. This causes an unwanted lowering of the performance of the electric machine.

Another disadvantage is that these electric machines are complex to control because the higher the angular speed, the more complex it is to regulate and/or keep it constant.

Another disadvantage is that electric machines known in the state of the art are voluminous and bulky.

There is therefore a need to make an electric machine which overcomes at least one of the disadvantages of the state of the art.

One purpose of the present invention is to make an electric machine that is able to provide, given the same mechanical energy supplied, an electric power greater than that obtainable from an electric machine known in the state of the art.

Another purpose is to make an electric machine that is able to provide, given the same size, an electric power equal to or greater than that obtainable with an electric machine known in the state of the art.

Another purpose is to make an electric machine that can be installed in existing plants simply and quickly, without requiring significant structural modifications to known plants.

Another purpose is to make a compact electric machine that is economical to produce.

Another purpose is to make an electric machine with a better performance than electric machines known in the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the electric machine according to the present invention comprises a frame and at least a first drive shaft rotatable with respect to the frame.

The electric machine also comprises a first member and a second member configured to cooperate with each other to generate an electromagnetic field. In particular, one of either the first member or the second member comprises electric coils and the other of either the first member or the second member comprises at least an electromagnet and/or at least a permanent magnet.

In addition, the first member is rotatable around a first axis of rotation.

According to the present invention, the first drive shaft is configured to make the first member rotate around the first axis of rotation in a first direction of rotation.

According to the present invention, an electric machine in accordance with the present invention comprises drive means configured to make the second member rotate around the first axis of rotation in a second direction of rotation, opposite the first direction of rotation. The drive means comprise a return mechanism configured to be driven in rotation by the first drive shaft and comprising first transmission members, second transmission members, and third transmission members, each comprising a respective drive element and a respective driven element, wherein one of either said first transmission members or said third transmission members comprises a respective drive element installed on the first drive shaft, and a respective driven element, configured to drive one of either said first member or said second member in rotation around said first axis of rotation.

Thanks to the present invention, an electric machine is made available in which both the members which cooperate with each other to form the electromagnetic field are rotatable. In particular, since the first member and the second member rotate in opposite directions to each other, the present invention allows to obtain a relative speed between the first member and the second member that is much higher than the speed that the first member has with respect to the second member when the latter is attached to the frame, as occurs in electric machines known in the state of the art.

This is advantageous because it allows to obtain, given the same mechanical energy supplied at input, a greater electromotive force (emf) on the electric coils and, consequently, a greater amount of electric current.

The electric machine according to the present invention therefore advantageously has a higher efficiency than electric machines known in the state of the art.

Moreover, with the electric machine according to the present invention, given the same mechanical energy supplied, it is possible to use a lower number of electric coils than the number of electric coils present in a conventional electric machine to obtain an amount of electric energy comparable to the amount of electric energy produced by the electric machine known in the state of the art. The lower number of coils therefore allows to reduce the sizes and the production costs of the first member and/or the second member, so as to obtain an electric machine having a bulk and a lower cost compared with electric machines known in the state of the art.

Another advantage of the present invention is that it can be used in both existing and newly constructed plants to generate electric energy, such as hydroelectric or wind plants, or to generate electric energy suitable to power auxiliary user devices in means of transport, such as automobiles or boats.

The above advantages of the electric machine according to the present invention mean that it is particularly suitable to be installed in existing plants in association with a source of mechanical energy which would otherwise be wasted in order to obtain electric powers even of minor entity.

Embodiments of the present invention also concern a method to generate current from an electric machine as described below, comprising a frame and at least a first drive shaft rotatable with respect to said frame, wherein the electric machine also comprises a first member and a second member configured to cooperate with each other to generate an electromagnetic field, one of either the first member or the second member comprising electric coils and the other of either the first member or the second member comprising at least an electromagnet and/or at least a permanent magnet. The method provides the steps of rotating the first member around a first axis of rotation in a first direction of rotation by means of the at least one first drive shaft; rotating the second member around the same first axis of rotation in a second direction of rotation, opposite the first direction of rotation, by means of drive means; and rotating the first member and said second member at an equal angular speed modulus.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view in section of an electric machine according to the present invention;
- fig. 2 is a schematic view in section of a variant embodiment of the electric machine in fig. 1;
- fig. 3 is a schematic view in section of another embodiment of an electric machine according to the present invention;
- fig. 4 is a view from above of fig. 3;
- fig. 5 is a cross section view along the line V-V of fig. 4;
- fig. 6 is a cross section view along the line VI-VI of fig. 4;
- fig. 7 is a cross section view along the line VII-VII of fig. 4.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

Embodiments described here with reference to the attached drawings show an electric machine, indicated as a whole by the reference number 10.

According to the present invention, the electric machine 10 comprises a frame 11 and at least a first drive shaft 12 which can rotate with respect to the frame 11.

The electric machine 10 comprises a first member 13, also called the first rotor, rotatable around a first axis of rotation X, and a second member 14.

The first member 13 and the second member 14 are configured to cooperate with each other so as to generate an electromagnetic field.

The second member 14 comprises electric coils 15, and the first member 13 comprises at least one electromagnet and/or at least one permanent magnet 16.

In alternative versions, the first member 13 can comprise electric coils 15 and the second member 14 can comprise an electromagnet and/or a permanent magnet 16.

The electric energy is generated by means of the relative rotation of the first member 13 and the second member 14, so that a rotating magnetic field induces an electromotive force on the electric coils 15, in accordance with the physical laws that govern electromagnetism.

In particular, the first member 13 is disposed inside the second member 14. In other words, in the configurations shown in the attached drawings, the second member 14 surrounds the first member 13 annularly.

According to the present invention, the first drive shaft 12 is configured to make the first member 13 rotate around the first axis of rotation X in a first direction of rotation R1.

According to the present invention, moreover, the second member 14 can also rotate around the first axis of rotation X.

Unlike electric machines known in the state of the art, the present invention does not provide a stator, meaning by this term a "member fixed to the frame". For this reason, the second member 14 can also be referred to as a second rotor, or improperly as a "counter-rotating stator".

The electric machine 10 comprises drive means 17 configured to make the second member 14 rotate around the first axis of rotation X in a second direction of rotation R2, opposite the first direction of rotation R1.

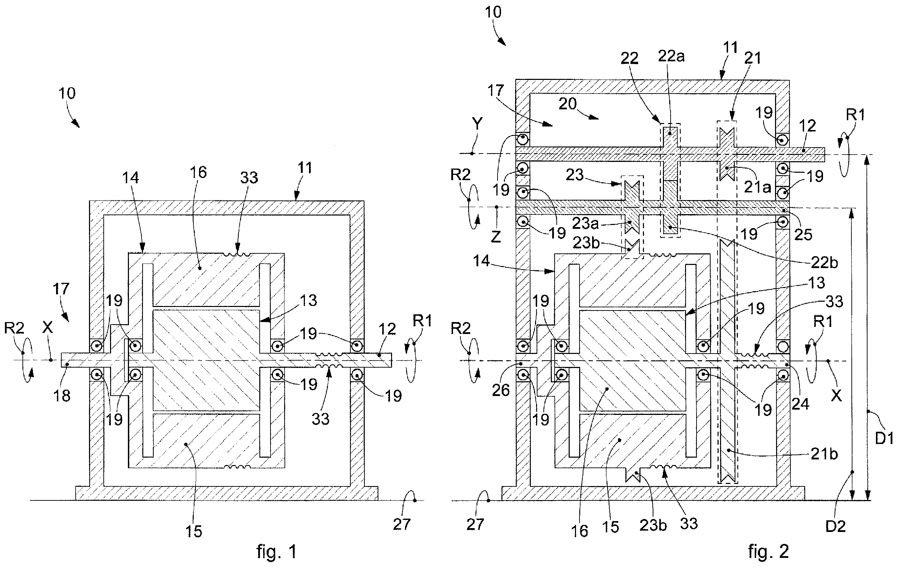

According to a first embodiment, shown by way of example in fig. 1, the drive means 17 can comprise a second drive shaft 18, rotatable with respect to the frame 11.

According to this embodiment, the first drive shaft 12 and the second drive shaft 18 are coaxial with respect to each other and develop along the first axis of rotation X.

Advantageously, the first drive shaft 12 and the second drive shaft 18 can be connected to the frame 11 by suitable guide members 19 - for example radial bearings of the ball or roller type - able to allow the rotation thereof with respect to the frame 11.

In this first embodiment, the first member 13 is then keyed on the first drive shaft 12 so as to be rotatable together with the latter around the first axis of rotation X in the first direction of rotation R1, while the second member 14 is keyed on the second drive shaft 18 so as to be rotatable together with the latter around the first axis of rotation X in the second direction of rotation R2, opposite the first direction of rotation R1.

Guide members 19 are provided in suitable positions where the second member 14 contacts the first member 13 so as to allow the relative rotation of the first member 13 and the second member 14.

According to possible embodiments, the same mechanical energy can be supplied at input to the first drive shaft 12 and to the second drive shaft 18. In this case, the first drive shaft 12 and the second drive shaft 18 can rotate at the same angular rotation speed.

A second embodiment of an electric machine according to the present invention is shown in figs. 2-4. In this embodiment, the drive means 17 are configured as a return mechanism 20 configured to be driven in rotation by the first drive shaft 12.

According to this embodiment, the electric machine 10 can comprise a single first drive shaft 12 rotatable with respect to the frame 11 around a second axis of rotation Y.

According to possible embodiments, the return mechanism 20 can comprise first transmission members 21, second transmission members 22, and third transmission members 23.

Each of the transmission members 21, 22, 23 comprises at least one pair of motion transmission elements known in the state of the art, such as for example gears or toothed wheels, or pulleys connected by belts; each pair being indicated by a dotted line in figs. 2-4.

The return mechanism 20 also comprises a plurality of motion transmission shafts 24, 25, 26. These are idle shafts or pipes which are driven in rotation by the transmission members 21, 22, 23.

We will now describe in detail the structure of the return mechanism 20 and its functioning.

Each of the transmission members 21, 22, 23 comprises a respective drive element 21a, 22a, 23a and a respective driven element 21b, 22b, 23b.

At least one of either the first transmission member 21 or the third transmission member 23 comprises a respective drive element 21a; 23a installed on the first drive shaft 12, and a respective driven element 21b; 23b, configured to make one of either the first member 13 or the second member 14 rotate around the first axis of rotation X.

According to the present invention, the second transmission members 22 comprise a respective drive element 22a, also installed on the first drive shaft 12, and a respective driven element 22b, installed on a second transmission shaft 25, which extends along a third axis of rotation Z. Furthermore, the other of either the first rotational members 21 or the third transmission members 23 comprises a respective drive element 23a; 21a, installed on the second transmission shaft 25, and a respective driven element 23b; 21b, associated with the other of either the second member 14 or the first member 13.

With reference to the embodiment shown in fig. 2, the first transmission members 21 comprise a drive element 21a, installed on the first drive shaft 12, and a driven element 21b, installed on a first transmission shaft 24. It should be noted that in this embodiment, the first member 13 is keyed on the first transmission shaft 24, which extends along the first axis of rotation X.

Consequently, the rotation of the first drive shaft 12 makes the first member 13 rotate around the first axis of rotation X by the action of the elements 21a, 21b of the first transmission member 21.

According to this variant embodiment, the third transmission members 23 comprise a respective drive element 23a, also installed on the second transmission shaft 25, and a respective driven element 23b, associated with the second member 14.

In some embodiments, the respective driven element 23b can be connected to the second member 14 by means of mechanical connection means known in the state of the art, such as for example a plurality of threaded screws, or in alternative embodiments, it can be integrated in a single body with the second member 14.

It should also be noted that in the embodiment shown in fig. 2 the first member 13 is associated with the first transmission shaft 24 and the second member 14 is conformed so as to be connected to a third transmission shaft 26, which extends coaxial to the first transmission shaft 24 along the first axis of rotation X.

During use, the first drive shaft 12 makes both the second drive shaft 25 rotate around the third axis of rotation Z by the action of the elements 22a, 22b, and also the second member 14 (and with it the third drive shaft 26 ) around the first axis of rotation X, by the action of the elements 23a, 23b. It should be noted that the particular configuration of the return mechanism 20 causes the second transmission shaft 25 to rotate in the second direction of rotation R2, that is, in a direction opposite to the first direction of rotation R1, that is, the direction of rotation of the first drive shaft 12.

In one embodiment, the axes of rotation X, Y and Z are all parallel to one another.

The return mechanism 20 described above is configured in such a way as to make the first member 13, and with it the first transmission shaft 24, rotate in the first direction of rotation R1, concordant with the direction of rotation of the first drive shaft 12, and it is also configured to make the second member 14, and with it the third transmission shaft 26, rotate in the second direction of rotation R2, opposite the first direction of rotation R1.

It is not excluded, however, that the transmission members 21, 22, 23 can be configured to make the first member 13 rotate in the opposite direction to the direction of rotation of the first drive shaft 12, and consequently, the second member 14 in a direction concordant with the direction of rotation of the first drive shaft 12.

Advantageously, the first drive shaft 12 and the transmission shafts 24, 25, 26 can be connected to the frame 11 by means of guide members 19 - for example radial bearings, of the ball or roller type - able to allow rotation with respect to the frame 11.

According to the embodiment shown in fig. 2, the first drive shaft 12 and the second drive shaft 25 are located at different vertical heights D1, D2 with respect to a base 27 of the frame 11. In particular, the first drive shaft 12 is disposed at a first vertical height, defined by a first distance D1 between the second axis of rotation Y and the base 27, and the second transmission shaft 25 is disposed at a second vertical height, defined by a second distance D2 between the third axis of rotation Z and the base 27.

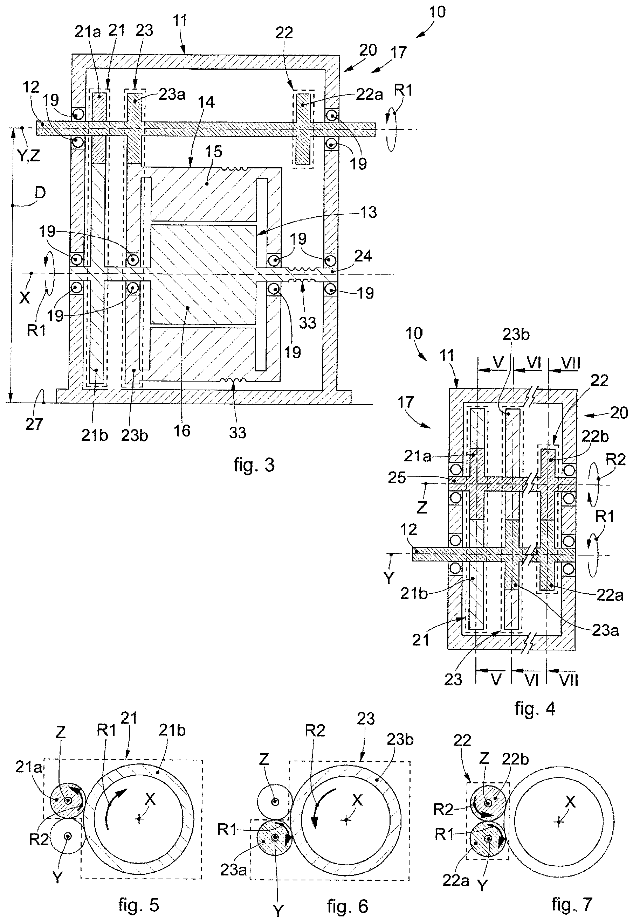

According to an alternative embodiment, shown in figs. 3 and 4, the first drive shaft 12 and the second drive shaft 25 are located at the same vertical height D with respect to the base of the frame 11.

With reference to the embodiment shown in figs. 3-4, moreover, the third transmission members 23 comprise a drive element 23a, installed on the first drive shaft 12, and a driven element 23b, configured to make the second member 14 rotate around the first axis of rotation X.

According to this variant embodiment, the first transmission members 21 comprise a respective drive element 21a, also installed on the second transmission shaft 25, and a respective driven element 21b, associated with the first member 13.

During use, the first drive shaft 12 makes both the second member 14 rotate around the first axis of rotation X, through the action of the elements 23a, 23b, and also the second transmission shaft 25 around the third axis of rotation Z through the action of the elements 22a, 22b. In this variant embodiment, thanks to the action of the elements 21a, 21b, the first member 13 (and with it the first transmission shaft 24) is made to rotate around the first axis of rotation X, in a direction opposite to the direction of rotation of the second member 14.

It is obvious that the elements comprised in the transmission members 21, 22, 23 are suitably sized according to the reduction ratio of the speeds to be obtained.

For example, if it is desired to give the second member 14 an angular speed equal in module to that of the first member 13, as known in the state of the art, the elements 21a, 22b, 22a, 22b and 23a, 23b have substantially the same diameter and/or the same number of teeth, in the case of toothed elements, in order to have a reduction ratio of 1: 1.

Figs. 5-7 show schematic sectional views of the return mechanism 20 in fig. 4, in which both the relative spatial disposition of the transmission members 21, 22, 23 with respect to each other, and the size of each of them, are visible.

According to possible embodiments, the first member 13 and/or the second member 14 can be provided with electric brushes 33, as conventionally known in the state of the art.

According to the present invention, a method to generate current by means of an electric machine 10 as described above is also provided, which provides the steps of:
- rotating the first member 13 around the first axis of rotation X in a first direction of rotation R1 by means of a first drive shaft 12;
- rotating the second member 14 around the first axis of rotation X in a second direction of rotation R2, opposite the first direction of rotation R1, by means of drive means 17.

According to possible embodiments, the method advantageously provides to rotate the first member 13 and the second member 14 at an angular speed equal in module.

It is clear that modifications and/or additions of parts can be made to the electric machine and the method to generate electric energy using said electric machine as described heretofore, without departing from the field and scope of the present invention, as defined in the appended claims.

It is also clear that, although the present invention has been described with reference to some specific examples, a person of skill in the art shall certainly be able to achieve many other equivalent forms of electric machine and the method to generate electric energy using said electric machine, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Electric machine comprising a frame (11) and at least a first drive shaft (12) rotatable with respect to said frame (11), said electric machine (10) also comprising a first member (13) and a second member (14) configured to cooperate with each other to generate an electromagnetic field, one of either said first member (13) or said second member (14) comprising electric coils (15) and the other of either said first member (13) or said second member (14) comprising at least an electromagnet and/or at least a permanent magnet (16), said first member (13) being rotatable around a first axis of rotation (X), wherein said first drive shaft (12) is configured to make said first member (13) rotate around said first axis of rotation (X) in a first direction of rotation (R1), wherein said electric machine (10) also comprises drive means (17) configured to make said second member (14) rotate around said first axis of rotation (X) in a second direction of rotation (R2), opposite said first direction of rotation (R1);
said electric machine being **characterized in that** said drive means (17) comprise a return mechanism (20) configured to be driven in rotation by said first drive shaft (12), and **in that** said return mechanism (20) comprises first transmission members (21), second transmission members (22), and third transmission members (23), each comprising a respective drive element (21a, 22a, 23a) and a respective driven element (21b, 22b, 23b), wherein one of either said first transmission members (21) or said third transmission members (23) comprises a respective drive element (21a; 23a) installed on the first drive shaft (12), and a respective driven element (21b; 23b), configured to drive one of either said first member (13) or said second member (14) in rotation around said first axis of rotation (X).

2. Electric machine as in claim 1, **characterized in that** said second transmission members (22) comprise a respective drive element (22a), installed on said first drive shaft (12), and a respective driven element (22b), installed on a second transmission shaft (25), said second transmission shaft (25) extending along a third axis of rotation (Z), **and in that** the other of either said first transmission members (21) or said third transmission members (23) comprises a respective drive element (23a; 21a), installed on said second transmission shaft (25), and a respective driven element (23b; 21b), associated with the other of either said second member (14) or said first member (13).

3. Electric machine as in claim 2, **characterized in that** said first member (13) is associated with said first transmission shaft (24) **and in that** said second member (14) is conformed so as to be connected to a third transmission shaft (26), said third transmission shaft (26) extending coaxial to said first transmission shaft (24) along said first axis of rotation (X).

4. Method to generate current by means of an electric machine (10) as in any claim hereinbefore, comprising a frame (11) and at least a first drive shaft (12) rotatable with respect to said frame (11), wherein said electric machine (10) also comprises a first member (13) and a second member (14) configured to cooperate with each other to generate an electromagnetic field, one of either said first member (13) or said second member (14) comprising electric coils (15) and the other of either said first member (13) or said second member (14) comprising at least an electromagnet and/or at least a permanent magnet (16), **characterized in that** it provides the steps of:
- rotating said first member (13) around a first axis of rotation (X) in a first direction of rotation (R1) by means of said at least one first drive shaft (12);
- rotating said second member (14) around said first axis of rotation (X) in a second direction of rotation (R2), opposite said first direction of rotation (R1), by means of drive means (17);
- rotating said first member (13) and said second member (14) at an equal angular speed modulus.

## Patentansprüche

1. Elektrische Maschine umfassend einen Rahmen (11) und mindestens eine erste Antriebswelle (12), die bezüglich des Rahmens (11) drehbar ist, wobei die elektrische Maschine (10) außerdem ein erstes Element (13) und ein zweites Element (14) aufweist, die derart ausgestaltet sind, dass sie miteinander zusammenwirken, um ein elektromagnetisches Feld zu erzeugen, wobei entweder das erste Element (13) oder das zweite Element (14) elektrische Spulen (15) und das andere des entweder ersten Elements (13) oder des zweiten Elements (14) mindestens einen Elektromagneten und/oder mindestens einen Permanentmagneten (16) umfasst, wobei das erste Element (13) um eine erste Drehachse (X) drehbar ist, wobei die erste Antriebswelle (12) dazu ausgelegt ist, dass sich das erste Element (13) um die erste Drehachse (X) in einer ersten Drehrichtung (R1) dreht, wobei die elektrische Maschine (10) außerdem Antriebsmittel (17) umfasst, die so ausgestaltet sind, dass sie das zweite Element (14) um die erste Drehachse (X) in einer zweiten Drehrichtung (R2), die der ersten Drehrichtung (R1) entgegengesetzt ist, in Drehung versetzen;
wobei die elektrische Maschine **dadurch gekennzeichnet ist, dass** die Antriebsmittel (17) einen Rückstellmechanismus (20) umfassen, der so ausgestaltet ist, dass er durch die erste Antriebswelle (12) in Drehung versetzt wird, und dass der Rückstellmechanismus (20) erste Übertragungselemente (21), zweite Übertragungselemente (22) und dritte Übertragungselemente (23) umfasst, die jeweils ein entsprechendes Antriebselement (21a, 22a, 23a) und ein entsprechendes angetriebenes Element (21b, 22b, 23b) umfassen, wobei entweder das erste Übertragungselement (21) oder das dritte Übertragungselement (23) ein jeweiliges Antriebselement (21a; 23a), das an der ersten Antriebswelle (12) installiert ist, und ein entsprechendes angetriebenes Element (21b; 23b) umfasst, das so ausgestaltet ist, dass es entweder das erste Element (13) oder das zweite Element (14) in Drehung um die erste Drehachse (X) versetzt.

2. Elektrische Maschine gemäß Anspruch 1, **dadurch gekennzeichnet, dass** die zweiten Übertragungselemente (22) ein entsprechendes Antriebselement (22a), installiert auf der ersten Antriebswelle (12), und ein entsprechendes angetriebenes Element (22b), installiert auf einer zweiten Getriebewelle (25) umfassen, wobei die zweite Getriebewelle (25) sich entlang einer dritten Drehachse (Z) erstreckt, und **dadurch gekennzeichnet, dass** das andere des entweder ersten Übertragungselements (21) oder des dritten Übertragungselements (23) jeweils ein Antriebselement (23a; 21a) umfasst, das auf der zweiten Getriebewelle (25) installiert ist, und ein entsprechendes angetriebenes Element (23b; 21b) umfasst, das dem anderen des entweder zweiten Elements (14) oder des ersten Elements (13) zugeordnet ist.

3. Elektrische Maschine gemäß Anspruch 2, **dadurch gekennzeichnet, dass** das erste Element (13) mit der ersten Getriebewelle (24) verbunden ist, und dass das zweite Element (14) so ausgebildet ist, dass es mit einer dritten Getriebewelle (26) verbunden ist, wobei die dritte Getriebewelle (26) sich entlang der ersten Drehachse (X) koaxial zur ersten Getriebewelle (24) erstreckt.

4. Verfahren zur Stromerzeugung mittels einer elektrischen Maschine (10) gemäß einem der vorgehenden Ansprüche, die einen Rahmen (11) und mindestens eine bezüglich des Rahmens (11) drehbare, erste Antriebswelle (12) umfasst, wobei die elektrische Maschine (10) außerdem ein erstes Element (13) und ein zweites Element (14) umfasst, die derart ausgestaltet sind, dass sie miteinander zusammenwirken, um ein elektromagnetisches Feld zu erzeugen, wobei eines des entweder ersten Elements (13) oder des zweiten Elements (14) elektrische Spulen (15) umfasst und das andere des entweder ersten Elements (13) oder des zweiten Elements (14), mindestens einen Elektromagneten und/oder mindestens einen Permanentmagneten (16) umfasst, **dadurch gekennzeichnet, dass** es die folgenden Schritte aufweist:
- Drehen des ersten Elements (13) um eine erste Drehachse (X) in einer ersten Drehrichtung (R1) mittels der mindestens einen ersten Antriebswelle (12);
- Drehen des zweiten Elements (14) um die erste Drehachse (X) in einer zweiten Drehrichtung (R2), entgegengesetzt zur ersten Drehrichtung (R1), mittels Antriebsmitteln (17);
- Drehen des ersten Elements (13) und des zweiten Elements (14) mit einem gleichen Winkelgeschwindigkeitsmodul.

## Revendications

1. Machine électrique comprenant un bâti (11) et au moins un premier arbre d'entraînement (12) rotatif par rapport audit bâti (11), ladite machine électrique (10) comprenant également un premier organe (13) et un deuxième organe (14) configurés pour coopérer l'un avec l'autre pour générer un champ électromagnétique, l'un parmi ledit premier organe (13) et ledit deuxième organe (14) comprenant des bobines électriques (15) et l'autre parmi ledit premier organe (13) ou ledit deuxième organe (14) comprenant au moins un électro-aimant et/ou au moins un aimant permanent (16), ledit premier organe (13) étant apte à tourner autour d'un premier axe de rotation (X), ledit premier arbre d'entraînement (12) étant configuré pour amener ledit premier organe (13) à tourner autour dudit premier axe de rotation (X) selon un premier sens de rotation (R1), ladite machine électrique (10) comprenant également des moyens d'entraînement (17) configurés pour faire tourner ledit deuxième organe (14) autour dudit premier axe de rotation (X) dans un deuxième sens de rotation (R2), opposé audit premier sens de rotation (R1) ;
ladite machine électrique étant **caractérisée en ce que** lesdits moyens d'entraînement (17) comprennent un mécanisme de rappel (20) configuré pour être entraîné en rotation par ledit premier arbre d'entraînement (12), et **en ce que** ledit mécanisme de rappel (20) comprend des premiers organes de transmission (21), des deuxièmes organes de transmission (22) et des troisièmes organes de transmission (23), comprenant chacun un élément d'entraînement respectif (21a, 22a, 23a) et un élément mené respectif (21b, 22b, 23b), l'un parmi lesdits premiers organes de transmission (21) ou lesdits troisièmes organes de transmission (23) comprenant un élément d'entraînement respectif (21a ; 23 a) installé sur le premier arbre d'entraînement (12), et un élément mené respectif (21b ; 23b), configuré pour entraîner l'un parmi ledit premier organe (13) et ledit deuxième organe (14) en rotation autour dudit premier axe de rotation (X).

2. Machine électrique selon la revendication 1, **caractérisée en ce que** lesdits deuxièmes organes de transmission (22) comprennent un élément d'entraînement respectif (22a), installé sur ledit premier arbre d'entraînement (12), et un élément mené respectif (22b), installé sur un deuxième arbre de transmission (25), ledit deuxième arbre de transmission (25) s'étendant le long d'un troisième axe de rotation (Z), et **en ce que** l'autre desdits premiers organes de transmission (21) ou desdits troisièmes organes de transmission (23) comprend un élément d'entraînement respectif (23a ; 21a), installé sur ledit deuxième arbre de transmission (25), et un élément mené respectif (23b ; 21b), associé à l'autre parmi ledit deuxième organe (14) ou ledit premier organe (13).

3. Machine électrique selon la revendication 2, **caractérisée en ce que** ledit premier organe (13) est associé audit premier arbre de transmission (24) et **en ce que** ledit deuxième organe (14) est conformé de manière à être relié à un troisième arbre de transmission (26), ledit troisième arbre de transmission (26) s'étendant coaxialement audit premier arbre de transmission (24) le long dudit premier axe de rotation (X).

4. Procédé pour générer du courant au moyen d'une machine électrique (10) selon l'une quelconque des revendications précédentes, comprenant un bâti (11) et au moins un premier arbre d'entraînement (12) rotatif par rapport audit bâti (11), ladite machine électrique (10) comprenant également un premier organe (13) et un deuxième organe (14) configurés pour coopérer l'un avec l'autre pour générer un champ électromagnétique, l'un parmi ledit premier organe (13) et ledit deuxième organe (14) comprenant des bobines électriques (15) et l'autre parmi ledit premier organe (13) et ledit deuxième organe (14) comprenant au moins un électro-aimant et/ou au moins un aimant permanent (16), **caractérisé en ce qu'**il met en oeuvre les étapes suivantes :
- faire tourner ledit premier organe (13) autour d'un premier axe de rotation (X) dans un premier sens de rotation (R1) au moyen dudit au moins un premier arbre d'entraînement (12) ;
- faire tourner ledit deuxième organe (14) autour dudit premier axe de rotation (X) dans un deuxième sens de rotation (R2), opposé audit premier sens de rotation (R1), au moyen de moyens d'entraînement (17) ;
- faire tourner ledit premier organe (13) et ledit deuxième organe (14) à un module de vitesse angulaire égal.
